(19) Europäisches Patentamt European Patent Office Office européen des brevets

(11) EP 2 056 527 A1

(12) DEMANDE DE BREVET EUROPEEN

(43) Date de publication:
06.05.2009 Bulletin 2009/19

(51) Int Cl.:
*H04L 12/28* (2006.01)

(21) Numéro de dépôt: 08167995.3

(22) Date de dépôt: 30.10.2008

(84) Etats contractants désignés:
AT BE BG CH CY CZ DE DK EE ES FI FR GB GR HR HU IE IS IT LI LT LU LV MC MT NL NO PL PT RO SE SI SK TR
Etats d'extension désignés:
AL BA MK RS

(30) Priorité: 05.11.2007 FR 0758780

(71) Demandeur: FRANCE TELECOM
75015 Paris (FR)

(72) Inventeurs:
• Bernard, David
  35560 Marcille Raoul (FR)
• Noisette, Nadège
  35510 Cesson Sevigne (FR)
• Sanner, Jean Michel
  35310 Breal Sous Monfort (FR)

(74) Mandataire: Cabinet Bloch & Gevers
23bis, rue de Turin
75008 Paris (FR)

(54) **Sélection de bande de fréquence dans un réseau de télécommunications**

(57) Pour sélectionner une bande de fréquence dans un réseau de télécommunications disposant de plusieurs bandes de fréquence partiellement superposées, un dispositif (DC) mesure au moins une puissance d'un signal reçu dans chaque bande de fréquence et associe des paramètres respectivement aux bandes de fréquence, chaque paramètre étant déterminé en fonction d'une puissance maximale de signal reçu dans la bande de fréquence respective. Des scores sont attribués à au moins quelques unes des bandes de fréquence en fonction des paramètres associés à ladite bande de fréquence et aux bandes de fréquence partiellement superposées à ladite bande de fréquence, afin de sélectionner la bande de fréquence ayant un score minimal par rapport aux scores attribués aux bandes de fréquence. Le réseau de télécommunications peut être un réseau local sans fil.

FIG. 1

**Description**

La présente invention est relative à une sélection de bande de fréquence dans un réseau de télécommunications disposant de plusieurs bandes de fréquence partiellement superposées.

Plus particulièrement, elle a trait à une sélection de bande de fréquence pour un point d'accès d'un réseau sans fil de type WiFi ("Wireless Fidelity" en anglais).

Généralement, un point d'accès d'un réseau sans fil de type WiFi déployé sur un marché de type particulier, professionnel ou communautaire, émet des signaux dans une seule bande de fréquence qui est déterminée préalablement à l'installation du point d'accès et indépendamment des conditions radio d'utilisation. Cependant, les performances du point d'accès sont améliorées si le fonctionnement du point d'accès dépend des conditions radio.

Dans l'état de la technique, il existe des algorithmes permettant au point d'accès de sélectionner automatiquement une bande de fréquence pour émettre des signaux.

Certains algorithmes mesurent une puissance totale reçue dans chaque bande de fréquence dont dispose le point d'accès et sélectionnent la bande de fréquence pour laquelle la puissance totale reçue est minimale et dans laquelle au moins un grand nombre de points d'accès émettent des signaux.

Ces algorithmes ont pour inconvénient de ne pas considérer les interférences autres que celles générées par les signaux de type WiFi et les recouvrements entre les bandes de fréquence adjacentes.

Pour remédier aux inconvénients évoqués ci-dessus, un procédé selon l'invention pour sélectionner une bande de fréquence dans un réseau de télécommunications disposant de plusieurs bandes de fréquence partiellement superposées, comprenant une mesure d'au moins une puissance d'un signal reçu dans chaque bande de fréquence, est caractérisé en ce que la mesure comprend une détermination d'une puissance maximale de signal reçu dans chaque bande de fréquence, et en ce que le procédé comprend les étapes suivantes :

une association de paramètres respectivement aux bandes de fréquence, chaque paramètre étant déterminé en fonction de la puissance maximale de signal reçu dans la bande de fréquence respective,

une attribution de scores à au moins quelques unes des bandes de fréquence, un score étant attribué à une bande de fréquence en fonction des paramètres associés à ladite bande de fréquence et aux bandes de fréquence partiellement superposées à ladite bande de fréquence, et

une sélection de la bande de fréquence ayant un score minimal par rapport aux scores attribués aux bandes de fréquence.

Selon l'invention, la meilleure bande de fréquence disponible pour la couverture et les performances du réseau de télécommunications est sélectionnée automatiquement à l'aide de mesures disponibles existant dans le réseau, après un balayage des bandes de fréquence dont dispose le réseau. La bande de fréquence est par exemple sélectionnée afin d'être allouée à un canal de communication pour émettre et recevoir des signaux dans un réseau local sans fil.

L'invention permet de sélectionner la bande de fréquence qui offre les meilleures performances en débit pour un environnement radio donné, en tenant compte de signaux de brouillage dans la bande de fréquence et dans les bandes de fréquence adjacentes à cette dernière. A cet égard pour définir l'environnement radio, le paramètre associé à une bande de fréquence respective peut dépendre de la plus grande des puissances de signaux de brouilleurs identifiables reçus dans la bande de fréquence respective. Un signal de brouilleur identifiable est par exemple la voie balise d'un point d'accès inclus dans le réseau de télécommunication, ou d'un point d'accès ou d'une station de base dans un autre réseau voisin dudit réseau de télécommunication.

Selon une autre caractéristique de l'invention, une puissance de bruit peut être déterminée pour chaque bande de fréquence. Dans une première réalisation, un score peut n'être attribué qu'à chaque bande de fréquence dont la puissance de bruit déterminée est inférieure à un seuil. Dans une deuxième réalisation, un score peut être attribué à chaque bande de fréquence, et la bande de fréquence sélectionnée avec le score minimal par rapport aux scores attribués a une puissance de bruit déterminée inférieure à un seuil.

La bande de fréquence sélectionnée par le dispositif a le score minimal et une puissance de bruit inférieure au seuil. Dans la première réalisation, seules les bandes de fréquence pour lesquelles la puissance de bruit est inférieure à un seuil sont retenues lors de la détermination du score. Dans la deuxième réalisation, toutes les bandes de fréquence sont considérées lors de la détermination du score et la puissance de bruit déterminée pour la bande de fréquence ayant le score minimal est comparée au seuil afin de sélectionner cette bande de fréquence si la puissance de bruit est inférieure au seuil.

Selon une autre caractéristique de l'invention, les paramètres respectivement associés aux bandes de fréquence peuvent être pondérés respectivement par des coefficients pour l'attribution d'un score à chaque bande de fréquence, chaque coefficient associé à une bande de fréquence dépendant d'un débit maximum dans la bande de fréquence à laquelle est attribué le score en présence de signaux de brouillage dans la bande de fréquence à laquelle est associé le coefficient sur un débit maximum dans la bande de fréquence à laquelle est attribué le score en absence de signaux de brouillage .

Le score attribué à une bande de fréquence dépend donc des caractéristiques radio de réception du dispositif dans la bande de fréquence.

Selon une autre caractéristique de l'invention, le paramètre associé à une bande de fréquence peut être pondéré par un nombre d'équipements émettant des signaux dans ladite bande de fréquence pour l'attribution d'un score à ladite bande de fréquence.

Le score attribué à une bande de fréquence prend alors en compte particulièrement les équipements pouvant brouiller le signal émis par le dispositif dans la bande de fréquence susceptible d'être sélectionnée.

Selon une autre caractéristique de l'invention, les bandes de fréquence peuvent avoir des fréquences centrales respectives espacées entre elles d'un même intervalle de fréquence donné et une même largeur de bande. Le nombre de bandes de fréquence partiellement superposées à une bande de fréquence peut être sensiblement égal au double du rapport de la largeur de bande de fréquence sur l'intervalle de fréquence donné. L'invention est particulièrement adaptée à la sélection automatique de bande de fréquence dans un réseau sans fil de type WiFi disposant de bandes de fréquence d'une même largeur de bande et régulièrement réparties autour d'une fréquence de l'ordre de quelques gigahertz.

L'invention concerne également un dispositif pour sélectionner une bande de fréquence dans un réseau de télécommunications disposant de plusieurs bandes de fréquence partiellement superposées, comprenant un moyen pour mesurer au moins une puissance d'un signal reçu dans chaque bande de fréquence, caractérisé en ce que le moyen pour mesurer est apte à déterminer une puissance maximale de signal reçu dans chaque bande de fréquence, et en ce que le dispositif comprend :

un moyen pour associer des paramètres respectivement aux bandes de fréquence, chaque paramètre étant déterminé en fonction de la puissance maximale de signal reçu dans la bande de fréquence respective,
un moyen pour attribuer des scores à au moins quelques unes des bandes de fréquence, un score étant attribué à une bande de fréquence en fonction des paramètres associés à ladite bande de fréquence et aux bandes de fréquence partiellement superposées à ladite bande de fréquence, et
un moyen pour sélectionner la bande de fréquence ayant un score minimal par rapport aux scores attribués aux bandes de fréquence.

Enfin, l'invention se rapporte à un programme d'ordinateur apte à être mis en oeuvre dans un dispositif pour sélectionner une bande de fréquence, ledit programme comprenant des instructions qui, lorsque le programme est exécuté dans ledit dispositif, réalisent les étapes conforme au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un dispositif pour sélectionner une bande de fréquence dans un réseau de télécommunications selon l'invention ; et
- la figure 2 est un algorithme d'un procédé pour sélectionner une bande de fréquence selon l'invention.

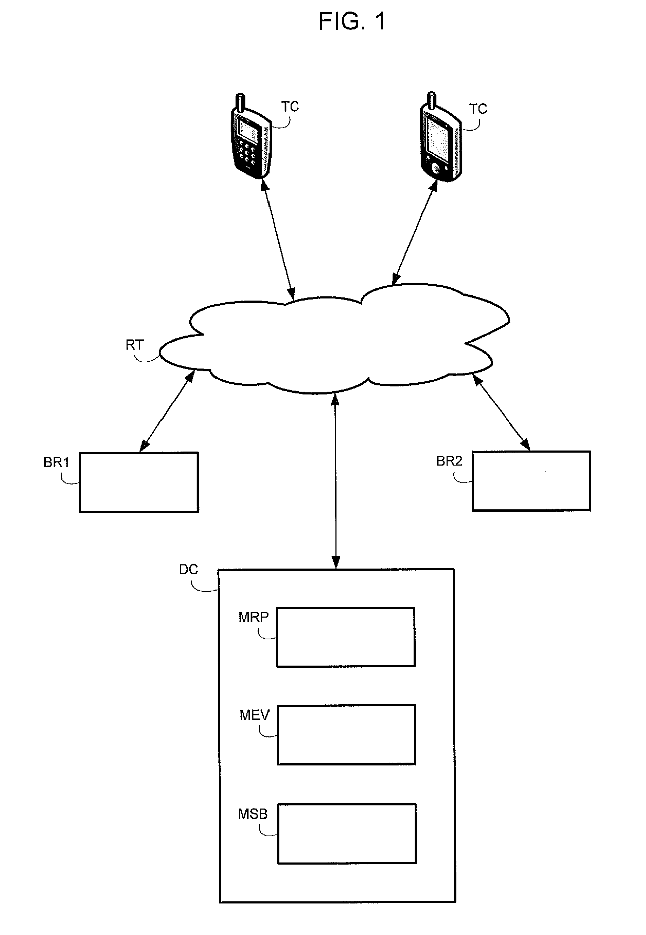

La figure 1 montre des moyens fonctionnels inclus dans un dispositif de communication DC pour la mise en oeuvre du procédé de l'invention dans un réseau de télécommunications RT.

Par exemple, le réseau de télécommunications RT est un réseau de radiocommunication numérique sans fil de faible portée du type WLAN ("Wireless Local Area Network" en anglais) conforme à l'une des normes 802.11 (b, g, a, n), par exemple satisfaisant le label WiFi. Selon un autre exemple, le réseau de télécommunications RT est un réseau de télécommunications filaire à multiplexage de fréquences.

Le réseau de télécommunications RT dispose de plusieurs bandes de fréquence partiellement superposées. Chaque bande de fréquence contient au moins une fréquence en commun avec au moins une autre bande de fréquence.

Par exemple dans un réseau de type WiFi, un point d'accès dispose de N = 13 bandes de fréquence réparties dans une bande de fréquence comprise entre 2,4 GHz environ et 2,5 GHz environ, par exemple ayant une largeur de bande égale à 20 MHz. Les bandes de fréquence ont chacune une largeur de bande d'environ 20 MHz et ont des fréquences centrales respectives espacées deux à deux d'un même intervalle de fréquence donné d'environ 5 MHz et par exemple équiréparties dans un intervalle de fréquence environ égal à 100 MHz. De manière générale, le nombre de bandes de fréquence partiellement superposées à une bande de fréquence donnée est égal au double de la valeur entière du rapport de la largeur de bande de fréquence sur l'intervalle de fréquence donné.

Selon l'exemple précédent, une bande de fréquence donnée $BF_n$, avec $1 \leq n \leq N$, est donc partiellement superposée au plus à huit bandes de fréquence adjacentes. Par exemple, une bande de fréquence donnée $BF_n$, avec $5 \leq n \leq 9$, est partiellement superposée à quatre bandes de fréquence adjacentes $BF_{n-4}$ à $BF_{n-1}$ ayant des fréquences

centrales inférieures à la fréquence centrale de la bande de fréquence donnée et quatre bandes de fréquence adjacentes $BF_{n+1}$ à $BF_{n+4}$ ayant des fréquences centrales supérieures à la fréquence centrale de la bande de fréquence donnée.

Le dispositif de communication DC est par exemple inclus dans un point d'accès dans un réseau de radiocommunication numérique sans fil. En particulier, des fonctionnalités du dispositif DC peuvent être implémentées dans le driver du processeur du point d'accès.

Dans le dispositif DC sont seulement représentés des blocs fonctionnels dont la plupart assurent des fonctions ayant un lien avec l'invention et peuvent correspondre à des modules logiciels et/ou matériels.

Le dispositif DC comprend un module de réception de puissance MRP, un module d'évaluation MEV et un module de sélection de bande de fréquence MSB.

Le dispositif DC est apte à émettre et à recevoir des signaux dans une bande de fréquence sélectionnée vers au moins un terminal client TC dans le réseau de télécommunications RT.

Selon un exemple de réalisation en référence à la figure 1, le réseau de télécommunications RT est un réseau de radiocommunication numérique sans fil de type WiFi. Afin de ne pas surcharger la figure 1, on a représenté seulement deux terminaux clients TC qui sont un terminal de radiocommunication cellulaire mobile et un assistant numérique personnel communicant.

Les terminaux clients TC et les réseaux de télécommunications RT ne sont pas limités aux exemples ci-dessus et peuvent être constitués par d'autres terminaux et réseaux connus.

Dans le réseau de télécommunications RT peuvent être présents des équipements de télécommunications qui émettent des signaux, appelés ci-après signaux de brouillage, brouillant les signaux émis ou reçus par le dispositif DC. De tels équipements sont désignés ci-après par des brouilleurs BR qui diffusent eux-mêmes des signaux de brouillage dans des bandes de fréquence partiellement superposées ou voisines de la bande de fréquence utilisée par le dispositif DC.

Les brouilleurs peuvent être classés en deux catégories selon qu'ils sont identifiables ou non. Dans la première catégorie, un brouilleur BR1 est identifiable et peut être du même type que le dispositif DC ; par exemple, le brouilleur BR1 est inclus dans un autre point d'accès du réseau de radiocommunication numérique sans fil RT auquel appartient le point d'accès incluant le dispositif DC, ou bien dans un point d'accès d'un réseau de radiocommunication numérique sans fil voisin du réseau RT, ou bien encore dans un équipement émettant des signaux de même nature que ceux émis par le dispositif DC, comme une station de base dans un réseau de type UMTS ("Universal Mobile Telecommunications System" en anglais). Les brouilleurs de la première catégorie sont identifiables par des voies balises dont les fréquences sont connues par le dispositif DC. Dans la deuxième catégorie, un brouilleur BR2 peut être un transmetteur inconnu du dispositif DC et émettant un signal dont la bande de fréquence s'étale dans au moins l'une des bandes de fréquence $BF_{n-4}$ à $BF_{n+4}$ attribuées au réseau RT. Le brouilleur BR2 est par exemple un émetteur vidéo dans un magnétoscope qui est capable d'émettre des signaux d'affichage analogiques vers un téléviseur voisin.

Par exemple, le dispositif DC est inclus dans un point d'accès d'un réseau de type WiFi sous la couverture duquel sont situés un brouilleur BR1 qui est un point d'accès d'un autre réseau de type WiFi et un brouilleur BR2 qui est un émetteur vidéo diffusant des signaux à 2,4 GHz. Le dispositif DC en tant que partie d'un point d'accès de type WiFi est relié par exemple à un modem à l'extrémité d'une ligne du type DSL ("Digital Subscriber Line" en anglais) pour desservir au moins un terminal client TC par liaison sans fil et le cas échéant un terminal client par liaison filaire.

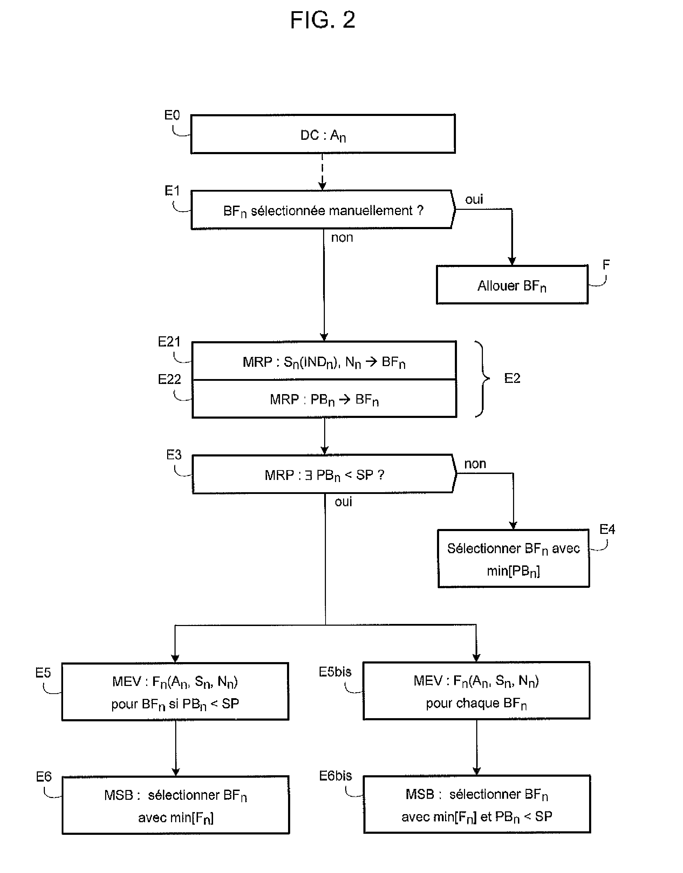

En référence à la figure 2, le procédé selon l'invention comprend des étapes E1 à E6 exécutées automatiquement dans le dispositif de communication DC et mises en oeuvre par des instructions d'un programme d'ordinateur enregistré sur un support d'enregistrement lisible par le dispositif de communication DC. Le dispositif DC est ci-après considéré par exemple comme inclus dans un point d'accès d'un réseau de type WiFi disposant de N = 13 bandes de fréquence $BF_n$, avec $1 \leq n \leq N$, chaque bande de fréquence $BF_n$ étant partiellement superposée au plus à huit bandes de fréquence adjacentes.

A une étape initiale E0, des coefficients $A_{n-4}$ à $A_{n+4}$ sont respectivement associés à des bandes de fréquence $BF_{n-4}$ à $BF_{n+4}$ et propres à une bande de fréquence donnée $BF_n$. Chaque coefficient $A_{n-4}$ à $A_{n+4}$ associé à une bande de fréquence considérée $BF_{n-4}$ à $BF_{n+4}$ est constant quelle que soit la bande de fréquence donnée $BF_n$. Chaque coefficient $A_{n-4}$ à $A_{n+4}$ dépend du rapport du débit maximum obtenu avec la bande de fréquence donnée $BF_n$ en présence de signaux de brouillage émis par des brouilleurs BR1 dans chaque bande de fréquence $BF_{n-4}$ à $BF_{n+4}$ sur le débit maximum obtenu avec la bande de fréquence donnée $BF_n$ en absence de signaux de brouillage. Par exemple, pour une bande de fréquence donnée $BF_n$, le coefficient $A_{n-1}$ relatif à la bande de fréquence adjacente $BF_{n-1}$ dépend du rapport du débit maximum obtenu avec la bande de fréquence $BF_n$ en présence de signaux de brouillage dans la bande de fréquence adjacente $BF_{n-1}$ sur le débit maximum obtenu avec la bande de fréquence donnée $BF_n$ en absence de signaux de brouillage.

Ces coefficients dépendent des performances de débits de transmission qui sont relatifs à chaque bande de fréquence et propres au dispositif DC. Un coefficient associé à une bande de fréquence adjacente à une bande de fréquence donnée représente la qualité de réception d'un signal dans ladite bande de fréquence donnée lorsqu'un brouilleur émet des signaux dans ladite bande de fréquence adjacente. Les débits précédents peuvent être préalablement mesurés dans le dispositif DC lors de tests avant la commercialisation du dispositif DC.

Par exemple, la détermination du coefficient $A_n$ relatif à la bande de fréquence $BF_n$ prend en compte un mécanisme d'esquive de collision relatif au protocole CSMA/CA ("Carrier Sense Multiple Access with Collision Avoidance" en anglais) de la couche de contrôle d'accès au support MAC ("Media Access Control" en anglais), mécanisme basé sur un principe d'accusés de réception réciproques entre le dispositif et le brouilleur émettant des signaux dans la bande de fréquence $BF_n$.

Lors d'une détermination d'un score d'évaluation pour une bande de fréquence donnée $BF_n$ à l'étape E5 comme décrit ci-après, le coefficient $A_n$ associé à la bande de fréquence donnée $BF_n$ vaut 0,4 quelle que soit la bande de fréquence donnée $BF_n$. A titre d'exemple pour une bande de fréquence donnée $BF_n$, les coefficients $A_{n-4}$ à $A_{n+4}$ respectivement associés aux bandes de fréquence $BF_{n-4}$ à $BF_{n+4}$ valent respectivement 0,2 ; 0, 9 ; 0,9 ; 0, 8 ; 0,4 ; 0,5 ; 0,6 ; 0,9 et 0,3. Si la bande de fréquence donnée est la bande $BF_6$, alors le coefficient $A_6$ associé vaut 0,4 et le coefficient $A_5$ associé à la bande $BF_5$ vaut 0,8. De même si la bande de fréquence donnée est la bande $BF_8$, alors le coefficient $A_8$ associé vaut 0,4 et le coefficient $A_7$ associé à la bande $BF_7$ vaut 0,8.

A l'étape E1, le dispositif DC vérifie si une bande de fréquence $BF_n$ a été sélectionnée manuellement par un utilisateur.

Si une bande de fréquence a déjà été sélectionnée, alors le module de sélection de bande de fréquence MSB du dispositif alloue la bande de fréquence sélectionnée à un canal de communication pour émettre et recevoir des signaux et le procédé se termine comme indiqué à une étape F.

Si aucune bande de fréquence n'a été préalablement sélectionnée, le dispositif DC balaie les N = 13 bandes de fréquence disponibles pour mesurer une puissance totale de signal reçu et une puissance de bruit dans chacune des bandes de fréquence $BF_n$ à l'étape E2 selon des sous-étapes E21 et E22.

A la sous-étape E21, pour chaque bande de fréquence $BF_n$, le dispositif DC recherche la présence de brouilleurs identifiables BR1 qui sont sous la couverture radio du point d'accès incluant le dispositif DC et qui émettent des signaux dans la bande de fréquence $BF_n$.

Pour chaque bande de fréquence $BF_n$, le module de réception de puissance MRP détermine une puissance de signal reçu pour chacun des brouilleurs BR1 détectés par exemple en fonction de la puissance d'un signal de balise émis par chacun des brouilleurs. Le module MRP définit un indicateur $IND_n$ de puissance reçue RSSI ("Received Signal Strength Indicator" en anglais) qui prend des valeurs comprises entre une valeur minimale par exemple égale à "0" et une valeur maximale par exemple égale à "100" en fonction de la puissance d'un signal reçu depuis un brouilleur BR1 détecté dans la bande de fréquence $BF_n$. Si l'indicateur $IND_n$ est égal à "0", le dispositif DC ne reçoit aucun signal, et si l'indicateur $IND_n$ est égal à "100", le dispositif reçoit dans la bande de fréquence $BF_n$ un signal avec une puissance supérieure à un seuil de puissance maximale. Cet indicateur est par exemple évalué au niveau de la couche physique pour indiquer la puissance de signal reçu par le dispositif en utilisant un en-tête PCLP (Physical Layer Control Protocol" en anglais) dans des unités de données de protocole PPDU ("PCLP Protocol Data Unit" en anglais).

Le module de réception de puissance MRP associe à chaque bande de fréquence $BF_n$ un nombre $N_n$ de brouilleurs BR1 qui sont sous la couverture radio du point d'accès incluant le dispositif DC et qui émettent des signaux dans la bande de fréquence $BF_n$.

Le module de réception de puissance MRP associe en outre à chaque bande de fréquence $BF_n$ un paramètre $S_n$ égal au plus grand d u ou des indicateurs $IND_n$ relatifs à la bande de fréquence $BF_n$. Le paramètre $S_n$ dépend donc de la puissance maximale reçue dans la bande de fréquence $BF_n$.

Par exemple, le dispositif DC détecte les signaux émis par deux brouilleurs BR1 au moyen de signaux de balise émis par ces derniers pour la bande de fréquence $BF_7$ et détermine deux indicateurs de puissance $InD_7$ relatifs aux deux brouilleurs détectés. Si les indicateurs $IND_7$ ont pour valeur 30 et 45, le paramètre $S_7$ associé à la bande de fréquence $BF_7$ est égal 45.

A la sous-étape E22, le module de réception de puissance MRP du dispositif DC détermine une puissance de bruit $PB_n$ pour chaque bande de fréquence $BF_n$. Par exemple, le dispositif DC extrait la puissance de bruit de mesures standard telles que la mesure d'un rapport signal reçu à bruit, le signal reçu étant par exemple l'ensemble des signaux de balise émis par les brouilleurs BR1 dans la bande de fréquence $BF_n$. La puissance de bruit $PB_n$ peut être liée à la sensibilité d'un récepteur inclus dans le dispositif DC par rapport à la qualité du signal reçu et être relative à des signaux autres que les signaux de balise et émis notamment par un ou des brouilleurs BR2.

A l'étape E3, le module de réception de puissance MRP compare chaque puissance de bruit $PB_n$ associée à une bande de fréquence $BF_n$ à un seuil prédéfini SP, par exemple égal à -50 dBm.

Si toutes les bandes de fréquence $BF_n$ sont associées respectivement à des puissances de bruit $PB_n$ supérieures au seuil prédéfini, le module de sélection de bande de fréquence MSB sélectionne la bande de fréquence $BF_n$ associée à la puissance de bruit $PB_n$ la plus faible et alloue la bande $BF_n$ à un canal de communication pour émettre et recevoir des signaux à l'étape E4.

Si au moins une bande de fréquence $BF_n$ est associée à une puissance de bruit $PB_n$ inférieure au seuil prédéfini SP, le module d'évaluation MEV attribue à l'étape E5 un score d'évaluation $F_n$ à chaque bande de fréquence $BF_n$

associée à une puissance de bruit $PB_n$ inférieure au seuil prédéfini SP. Le score d'évaluation $F_n$ est déterminé pour chaque bande de fréquence donnée $BF_n$ en fonction des coefficients $A_{n-4}$ à $A_{n+4}$ et des paramètres $S_{n-4}$ à $S_{n+4}$ associés à la bande de fréquence donnée $BF_n$ et aux bandes de fréquence partiellement superposées à la bande de fréquence donnée $BF_n$. Plus particulièrement, les paramètres $S_{n-4}$ à $S_{n+4}$ sont pondérés respectivement par les coefficients $A_{n-4}$ à $A_{n+4}$.

Chaque bande de fréquence donnée $BF_n$ est partiellement superposée au plus à huit bandes de fréquence adjacentes $BF_{n-4}$ à $BF_{n+4}$ et est associée au score d'évaluation $F_n$ défini par la relation suivante :

$$F_n = A_{n-4}S_{n-4} + A_{n-3}S_{n-3} + A_{n-2}S_{n-2} + A_{n-1}S_{n-1} + N_nA_nS_n + A_{n+1}S_{n+1} + A_{n+2}S_{n+2} + A_{n+3}S_{n+3} + A_{n+4}S_{n+4}.$$

Lorsque des brouilleurs identifiables BR1 émettent des signaux dans la bande de fréquence donnée $BF_n$, le coefficient $A_n$ associé à la bande de fréquence $BF_n$ est pondéré par le nombre $N_n$ des brouilleurs BR1 identifiables dans la bande $BF_n$.

Par exemple, le score d'évaluation $F_1$ associé à la bande de fréquence $BF_1$ dépend des coefficients $A_1$ et $A_2$, $A_3$, $A_4$ et $A_5$ et des paramètres $S_1$ et $S_2$, $S_3$, $S_4$ et $S_5$ associés respectivement à la bande de fréquence $BF_1$ et aux bandes de fréquence adjacentes $BF_2$, $BF_3$, $BF_4$ et $BF_5$.

Selon un autre exemple, le score d'évaluation $F_7$ associé à la bande de fréquence $BF_7$ dépend des coefficients $A_3$, $A_4$, $A_5$, $A_6$, $A_7$, $A_8$, $A_9$, $A_{10}$ et $A_{11}$, et des paramètres $S_3$, $S_4$, $S_5$, $S_6$, $S_7$, $S_8$, $S_9$, $S_{10}$ et $S_{11}$ associés à la bande de fréquence $BF_7$ et aux bandes de fréquence adjacentes $BF_3$, $BF_4$, $BF_5$, $BF_6$, $BF_8$, $BF_9$, $BF_{10}$ et $BF_{11}$.

Selon encore un autre exemple, seules les bandes de fréquence $BF_6$ et $BF_7$ sont associées à des puissances de bruit $PB_6$ et $PB_7$ inférieures au seuil prédéfini SP et seuls les scores d'évaluation $F_6$ et $F_7$ sont déterminés.

A l'étape E6, le module de sélection de bande de fréquence MSB sélectionne la bande de fréquence $BF_n$ ayant le score d'évaluation $F_n$ minimal parmi les scores d'évaluation déterminés précédemment. Le module MSB alloue la bande de fréquence sélectionnée à un canal de communication pour émettre et recevoir des signaux.

Si plusieurs scores d'évaluation associés à des bandes de fréquence sont identiques, alors le module MSB sélectionne la bande de fréquence parmi ces dernières avec la fréquence centrale la plus basse.

Selon un exemple de réalisation, le dispositif DC détecte $N_1 = 1$ brouilleur BR1 pour la bande de fréquence $BF_1$ et détermine un indicateur de puissance $IND_1$ égal à 55. En outre, le dispositif DC détecte $N_7 = 2$ brouilleurs BR1 pour la bande de fréquence $BF_7$ et détermine deux indicateurs de puissance $IND_7$ égaux à 45 et 30. Le dispositif DC associe alors des paramètres $S_1$ et $S_7$ respectivement égaux à 55 et 45 respectivement aux bandes de fréquence $BF_1$ et $BF_7$. Les autres paramètres $S_n$, pour $n \neq 1$ et $n \neq 7$, sont nuls. Comme décrit dans un exemple ci-dessus, pour une bande de fréquence donnée $BF_n$, les coefficients $A_{n-4}$ à $A_{n+4}$ respectivement associés aux bandes de fréquence $BF_{n-4}$ à $BF_{n+4}$ valent respectivement 0,2 ; 0,9 ; 0,9 ; 0,8 ; 0,4 ; 0,5 ; 0,6; 0,9 et 0,3. Les N = 13 scores d'évaluation $F_n$ associés respectivement aux N = 13 bandes de fréquence $BF_n$ ont les valeurs suivantes, chaque bande $BF_n$ ayant une puissance de bruit inférieure au seuil SP :

$$F_1 = N_1 \times A_1 \times S_1 = 1 \times 0,4 \times 55 = 22;$$

$$F_2 = A_{2-1} \times S_1 = 0,8 \times 55 = 44;$$

$$F_3 = A_{3-2} \times S_1 + A_{3+4} \times S_7 = 0,9 \times 55 + 0,3 \times 45 = 63;$$

$$F_4 = A_{4-3} \times S_1 + A_{4+3} \times S_7 = 0,9 \times 55 + 0,9 \times 45 = 90;$$

$$F_5 = A_{5-4} \times S_1 + A_{5+2} \times S_7 = 0,2 \times 55 + 0,6 \times 45 = 38;$$

$$F_6 = A_{6+1} \times S_7 = 0,5 \times 45 = 22,5;$$

$$F_7 = N_2 \times A_7 \times S_7 = 2 \times 0,4 \times 45 = 36;$$

$$F_8 = A_{8-1} \times S_7 = 0,8 \times 45 = 36;$$

$$F_9 = A_{9-2} \times S_7 = 0,9 \times 45 = 40,5;$$

$$F_{10} = A_{10-3} \times S_7 = 0,9 \times 45 = 40,5;$$

$$F_{11} = A_{11-4} \times S_7 = 0,2 \times 55 = 9;$$

$$F_{12} = 0;$$

et

$$F_{13} = 0.$$

Les deux bandes de fréquence $BF_{12}$ et $BF_{13}$ ont des puissances de bruit $PB_{12}$ et $PB_{13}$ inférieures au seuil prédéfini SP et un score d'évaluation qui est minimal parmi les différents scores d'évaluation. Le module MSB sélectionne alors la bande de fréquence $BF_{12}$ puisqu'elle a une fréquence centrale plus basse que celle de la bande de fréquence $BF_{12}$.

Dans une variante, le module d'évaluation MEV attribue à une étape E5bis un score d'évaluation $F_n$ à chaque bande de fréquence $BF_n$, quelle que soit la puissance de bruit $PB_n$ associée à la bande de fréquence $BF_n$, c'est-à-dire même si la puissance de bruit $PB_n$ est supérieure au seuil prédéfini SP. Le score d'évaluation $F_n$ est déterminé pour chaque bande de fréquence donnée $BF_n$ comme à l'étape E5.

Puis à une étape E6bis, le module de sélection de bande de fréquence MSB détermine le score d'évaluation minimal parmi les scores d'évaluation déterminés précédemment. Le module MSB compare la puissance de bruit $PB_n$ associée à la bande de fréquence $BF_n$ avec le score d'évaluation le plus faible au seuil SP.

Si la puissance de bruit $PB_n$ est inférieure au seuil SP, le module MSB sélectionne la bande de fréquence $BF_n$ et alloue cette dernière à un canal de communication pour émettre et recevoir des signaux.

Si la puissance de bruit $PB_n$ est supérieure au seuil SP, le module MSB compare la puissance de bruit associée à la bande de fréquence avec le score d'évaluation le plus faible suivant au seuil SP. De même, si la puissance de bruit précédente est inférieure au seuil SP, la bande de fréquence est sélectionnée par le dispositif DC. Ce processus peut être répété jusqu'à trouver une puissance de bruit inférieure au seuil SP.

Le dispositif DC sélectionne donc la bande de fréquence $BF_n$ associée à une puissance de bruit $PB_n$ inférieure au seuil SP, qui a le score d'évaluation $F_n$ minimal.

L'invention décrite ici concerne un procédé et un dispositif pour sélectionner une bande de fréquence. Selon une implémentation, les étapes du procédé de l'invention sont déterminées par les instructions d'un programme d'ordinateur incorporé dans le dispositif tel que le dispositif de communication DC. Le programme comporte des instructions de programme qui, lorsque ledit programme est exécuté dans un processeur du dispositif dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

**Revendications**

1. Procédé pour sélectionner une bande de fréquence dans un réseau de télécommunications disposant de plusieurs bandes de fréquence ($BF_n$) partiellement superposées, comprenant une mesure (E21) d'au moins une puissance de signal reçu dans chaque bande de fréquence, **caractérisé en ce que** la mesure comprend une détermination (E21) d'une puissance maximale de signal reçu dans chaque bande de fréquence, et **en ce que** le procédé comprend les étapes suivantes :

   une association (E21) de paramètres ($S_n$) respectivement aux bandes de fréquence ($BF_n$), chaque paramètre ($S_n$) étant déterminé en fonction de la puissance maximale de signal reçu dans la bande de fréquence respective, une attribution (E5) de scores ($F_n$) à au moins quelques unes des bandes de fréquence ($BF_n$), un score étant attribué à une bande de fréquence en fonction des paramètres associés à ladite bande de fréquence et aux bandes de fréquence partiellement superposées à ladite bande de fréquence, et une sélection (E6) de la bande de fréquence ayant un score minimal par rapport aux scores attribués aux bandes de fréquence.

2. Procédé conforme à la revendication 1, selon lequel le paramètre ($S_n$) associé à une bande de fréquence respective ($BF_n$) dépend de la plus grande des puissances de signaux de brouilleurs identifiables (BR1) reçus dans la bande de fréquence respective.

3. Procédé conforme à la revendication 1, comprenant une détermination (E22) d'une puissance de bruit ($PB_n$) pour chaque bande de fréquence ($BF_n$), un score ($F_n$) n'étant attribué qu'à chaque bande de fréquence ($BF_n$) dont la puissance de bruit déterminée est inférieure à un seuil.

4. Procédé conforme à la revendication 1, comprenant une détermination (E22) d'une puissance de bruit ($B_n$) pour chaque bande de fréquence ($BF_n$), un score ($F_n$) étant attribué à chaque bande de fréquence, et la bande de fréquence sélectionnée avec le score minimal par rapport aux scores attribués ayant une puissance de bruit déterminée inférieure à un seuil.

5. Procédé conforme à l'une quelconque des revendications 1 à 4, selon lequel les paramètres ($S_n$) respectivement associés aux bandes de fréquence ($BF_n$) sont pondérés respectivement par des coefficients ($A_n$) pour l'attribution d'un score ($F_n$) à chaque bande de fréquence, chaque coefficient associé à une bande de fréquence dépendant d'un débit maximum dans la bande de fréquence à laquelle est attribué le score en présence de signaux de brouillage dans la bande de fréquence à laquelle est associé le coefficient sur un débit maximum dans la bande de fréquence à laquelle est attribué le score en absence de signaux de brouillage.

6. Procédé conforme à l'une quelconque des revendications 1 à 5, selon lequel le paramètre ($S_n$) associé à une bande de fréquence ($BF_n$) est pondéré par un nombre ($N_n$) d'équipements (BR1) émettant des signaux dans ladite bande de fréquence pour l'attribution d'un score ($F_n$) à ladite bande de fréquence.

7. Procédé conforme à l'une quelconque des revendications 1 à 6, selon lequel les bandes de fréquence ont des fréquences centrales respectives espacées entre elles d'un même un intervalle de fréquence donné et ont une même largeur de bande, et le nombre de bandes de fréquence partiellement superposées à une bande de fréquence est sensiblement égal au double du rapport de la largeur de bande de fréquence sur l'intervalle de fréquence donné.

8. Procédé conforme à l'une quelconque des revendications 1 à 7, selon lequel le réseau de télécommunications est un réseau local sans fil.

9. Dispositif pour sélectionner une bande de fréquence dans un réseau de télécommunications disposant de plusieurs bandes de fréquence ($BF_n$) partiellement superposées, comprenant un moyen (MRP) pour mesurer au moins une puissance d'un signal reçu dans chaque bande de fréquence, **caractérisé en ce que** le moyen pour mesurer (MRP) est apte à déterminer une puissance maximale de signal reçu dans chaque bande de fréquence, et **en ce que** le dispositif comprend :

un moyen (MRP) pour associer des paramètres ($S_n$) respectivement aux bandes de fréquence ($BF_n$), chaque paramètre ($S_n$) étant déterminé en fonction de la puissance maximale de signal reçu dans la bande de fréquence respective,

un moyen (MEV) pour attribuer des scores ($F_n$) à au moins quelques unes des bandes de fréquence ($BF_n$), un score étant attribué à une bande de fréquence en fonction des paramètres associés à ladite bande de fréquence et aux bandes de fréquence partiellement superposées à ladite bande de fréquence, et

un moyen (MSB) pour sélectionner la bande de fréquence ayant un score minimal par rapport aux scores attribués aux bandes de fréquence.

10. Dispositif selon la revendication 9, inclus dans un point d'accès d'un réseau local sans fil.

11. Programme d'ordinateur apte à être mis en oeuvre dans un dispositif (DC) pour sélectionner une bande de fréquence dans un réseau de télécommunications disposant de plusieurs bandes de fréquence ($BF_n$) partiellement superposées, ledit programme comprenant des instructions qui, lorsque le programme est chargé et exécuté dans ledit dispositif (DC), réalisent une mesure (E21) d'au moins une puissance d'un signal reçu dans chaque bande de fréquence, ledit programme étant **caractérisé en ce que** la mesure comprend une détermination (E21) d'une puissance maximale de signal reçu dans chaque bande de fréquence, et les instructions de programme réalisent en outre :

une association (E21) de paramètres ($S_n$) respectivement aux bandes de fréquence ($BF_n$), chaque paramètre ($S_n$) étant déterminé en fonction d'une puissance maximale de signal reçu dans la bande de fréquence respective,

une attribution (E5) de scores ($F_n$) à au moins quelques unes des bandes de fréquence ($BF_n$), un score étant attribué à une bande de fréquence en fonction des paramètres associés à ladite bande de fréquence et aux bandes de fréquence partiellement superposées à ladite bande de fréquence, et

une sélection (E6) de la bande de fréquence ayant un score minimal par rapport aux scores attribués aux bandes de fréquence.

12. Support d'enregistrement lisible par un dispositif sur lequel est enregistré un programme d'ordinateur pour sélectionner une bande de fréquence dans un réseau de télécommunications disposant de plusieurs bandes de fréquence ($BF_n$) partiellement superposées, ledit programme comportant des instructions pour une mesure (E21) d'au moins une puissance d'un signal reçu dans chaque bande de fréquence, **caractérisé en ce que** la mesure comprend une détermination (E21) d'une puissance maximale de signal reçu dans chaque bande de fréquence, et le programme d'ordinateur comporte des instructions pour l'exécution en outre des étapes suivantes :

une association (E21) de paramètres ($S_n$) respectivement aux bandes de fréquence ($BF_n$), chaque paramètre ($S_n$) étant déterminé en fonction d'une puissance maximale de signal reçu dans la bande de fréquence respective,

une attribution (E5) de scores ($F_n$) à au moins quelques unes des bandes de fréquence ($BF_n$), un score étant attribué à une bande de fréquence en fonction des paramètres associés à ladite bande de fréquence et aux bandes de fréquence partiellement superposées à ladite bande de fréquence, et

une sélection (E6) de la bande de fréquence ayant un score minimal par rapport aux scores attribués aux bandes de fréquence.

# FIG. 1

## FIG. 2

E0  DC : $A_n$

E1  BF$_n$ sélectionnée manuellement ? — oui → Allouer BF$_n$ — F

non

E21  MRP : $S_n(IND_n)$, $N_n$ → BF$_n$
E22  MRP : $PB_n$ → BF$_n$  } E2

E3  MRP : ∃ $PB_n$ < SP ? — non → Sélectionner BF$_n$ avec min[$PB_n$] — E4

oui

E5  MEV : $F_n(A_n, S_n, N_n)$ pour BF$_n$ si $PB_n$ < SP

E5bis  MEV : $F_n(A_n, S_n, N_n)$ pour chaque BF$_n$

E6  MSB : sélectionner BF$_n$ avec min[$F_n$]

E6bis  MSB : sélectionner BF$_n$ avec min[$F_n$] et $PB_n$ < SP

Europäisches
Patentamt

European
Patent Office

Office européen
des brevets

## RAPPORT DE RECHERCHE EUROPEENNE

Numéro de la demande

EP 08 16 7995

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2007/025310 A1 (WENG CHIH-HUNG [TW] ET AL) 1 février 2007 (2007-02-01) * abrégé * * alinéas [0006], [0007] * * alinéas [0014], [0015] * * alinéa [0019] * * figures * * revendications * ----- | 1-12 | INV. H04L12/28 |
| Y | EP 1 670 182 A (LG ELECTRONICS INC [KR]) 14 juin 2006 (2006-06-14) * abrégé * * alinéas [0009] - [0021] * * alinéas [0078] - [0084] * * figures * * revendications 1,9,15,21 * ----- | 1-12 | |
| A | US 2005/090241 A1 (BACKES FLOYD [US] ET AL) 28 avril 2005 (2005-04-28) * le document en entier * ----- | 1-12 | DOMAINES TECHNIQUES RECHERCHES (IPC) H04L H04Q |

Le présent rapport a été établi pour toutes les revendications

| Lieu de la recherche | Date d'achèvement de la recherche | Examinateur |
|---|---|---|
| La Haye | 4 mars 2009 | Dejonghe, Olivier |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 16 7995

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-03-2009

| Document brevet cité au rapport de recherche | | Date de publication | Membre(s) de la famille de brevet(s) | | Date de publication |
|---|---|---|---|---|---|
| US 2007025310 | A1 | 01-02-2007 | CN | 1905731 A | 31-01-2007 |
| | | | JP | 2007037145 A | 08-02-2007 |
| EP 1670182 | A | 14-06-2006 | CN | 1787472 A | 14-06-2006 |
| | | | KR | 20060063409 A | 12-06-2006 |
| | | | RU | 2319312 C2 | 10-03-2008 |
| | | | US | 2006120324 A1 | 08-06-2006 |
| US 2005090241 | A1 | 28-04-2005 | US | 2007195721 A1 | 23-08-2007 |

EPO FORM P0460

Pour tout renseignement concernant cette annexe : voir Journal Officiel de l'Office européen des brevets, No.12/82